# EUROPÄISCHE PATENTSCHRIFT

(11) **EP 3 772 490 B1**
(45) Veröffentlichungstag und Bekanntmachung des Hinweises auf die Patenterteilung: **10.11.2021**
(21) Anmeldenummer: 20189682.6
(22) Anmeldetag: 05.08.2020
(51) Int. Cl.: C03B 9/41, C03B 25/06, C03B 35/04, C03B 35/06, G01B 21/08

(54) **VERFAHREN ZUR WANDSTÄRKENMESSUNG EINES HOHLGLASARTIKELS**
METHOD FOR MEASURING THE WALL THICKNESS OF A HOLLOW GLASS ITEM
PROCÉDÉ DE MESURE DE L'ÉPAISSEUR DE PAROI D'UN ARTICLE EN VERRE CREUX

(30) Priorität: 06.08.2019 DE 102019005487
(43) Veröffentlichungstag der Anmeldung: 10.02.2021
(73) Patentinhaber: Heye International GmbH, 31683 Obernkirchen (DE)
(72) Erfinder: Pörtner, Dirk, 31691 Helpsen (DE)
(74) Vertreter: Michalski Hüttermann & Partner Patentanwälte mbB

(56) Entgegenhaltungen:
- EP-A1- 2 873 652
- US-A- 5 437 702
- US-A1- 2011 141 264
- US-A1- 2015 076 353

## Beschreibung

Die Erfindung bezieht sich auf ein Verfahren entsprechend dem Oberbegriff des Anspruchs 1.

Die Herstellung von Hohlglasartikeln beispielsweise auf einer I.S.-Maschine ist durch einen kontinuierlich ablaufenden Glasformgebungsprozess gekennzeichnet, wobei ausgehend von einer Reihe von portioniert bereitgestellten schmelzflüssigen Glastropfen in einem zweistufigen Prozess in einer Vorform zunächst ein Rohling, das sogenannte Külbel und aus diesem anschließend in einer Fertigform ein Endprodukt gebildet werden. Das Endprodukt, nämlich ein Hohlglasartikel, durchläuft unter Mitwirkung eines Förderbandes einen Kühlofen, wobei sich einige, die Oberfläche beschichtende oder auch versiegelnde Behandlungsstufen anschließen können. Der Ausgang des Kühlofens bildet den Anfang des kalten Endes der Glasproduktionsanlage. Der Artikel unterliegt mit dem Zeitpunkt des Verlassens der Fertigform, somit am heißen Ende der Hohlglasproduktionsanlage einem ständigen Wärmeverlust und muss noch auf das eventuelle Vorliegen von Herstellungsfehlern geprüft werden. Praktisch vollzieht sich der Formgebungsvorgang in Großserien nach einem festgelegten zeitlichen Ablauf, so dass für den eigentlichen Prüfvorgang eines Hohlglasartikels nur eine vergleichsweise kurze Zeitspanne zur Verfügung steht. Die einer solchen Prüfung zugrunde liegenden Kriterien betreffen die Maßhaltigkeit und insbesondere die Massenverteilung des Artikels, dessen Rotationssymmetrie bezüglich seiner Längssachse einschließlich dessen Winkelorientierung bezüglich einer Vertikalen und schließlich die Fehlerfreiheit des Glaswerkstoffs. Als Fehler können hierbei Einschlüsse von Fremdstoffen, Gasblasen, Risse vertikaler und horizontaler Art, strukturelle Störungen bzw. Anomalien im Oberflächenbereich, interne Spannungsbereiche usw. auftreten.

Das Fertigprodukt dieses Formgebungsprozesses ist in jedem Fall durch eine Vielzahl an Einstellungen von Maschinenparametern beeinflusst und es besteht aus Gründen der Qualitätssicherung ein großes Interesse, jedem hergestellten Hohlglasartikel den jeweiligen Satz an Parametern einschließlich der jeweils benutzten Produktionsstation und / oder der verwendeten Vor- und Fertigformen zuzuordnen, um eventuell fehlerbehaftete Einstellungen oder Zustände frühzeitig erkennen und korrigieren zu können. Eine wichtige Voraussetzung hierzu ist, dass jeder hergestellte Hohlglasartikel mit einer Codierung versehen ist, auf deren Grundlage die Herstellung einer Zuordnung von Prozess- und Prüfdaten möglich ist. Zu diesen Daten sind auch die benutzte Vor- und Fertigform sowie der Herstellungszeitpunkt zu rechnen. In jedem Fall werden solche Hohlglasartikel, deren Prüfwerte in einem nicht mehr tolerierbaren Maß von Sollwerten abweichen, ausgesondert und als Ausschuss verworfen.

Ein wichtiger zu prüfender Parameter eines Hohlglasartikels ist die Gleichförmigkeit dessen umfänglicher Wandstärkeverteilung, in Umfangsrichtung gesehen. Informationen betreffend diesen Parameter sollten zu einem frühestmöglichen Zeitpunkt während des Ablaufs des Produktionsprozesses gewonnen werden, um im Fall von auftretenden Anomalien schnellstmöglich eingreifen zu können.

Es ist bekannt, den umfänglichen Wandstärkeverlauf an einem sich um seine Längsachse drehenden Hohlglasartikel am kalten Ende zu prüfen. Eine Prüfung am heißen Ende unter Anwendung der gleichen Prüfverfahren ist unter Berücksichtigung der temperaturbedingten geringen mechanischen Stabilität der Hohlglasartikel nicht möglich. Abweichungen in einer Soll-Wandstärkeverteilung zeigen Probleme in der Glashomogenität sowie allgemein im Formgebungsprozess auf, die an sich ein rasches Reagieren mit dem Ziel einer Beseitigung dieser Abweichungen erfordern. Eine Feststellung dieser Abweichungen erst am kalten Ende erfolgt somit bedingt durch die Zeitspanne hauptsächlich eines Durchlaufs durch den Kühlofen erst zu vergleichsweise späten Zeitpunkt.

Es ist ferner bekannt, am heißen Ende IR-Kameras einzusetzen, welche eine Verteilung der Gesamtstrahlung einer Hohlglasartikelansicht vermitteln, von der angenommen wird, dass sie durch die Wandstärkeverteilung zumindest beeinflusst wird. So ist aus der EP 2 873 652 A1 ein Verfahren zur Verbesserung der Produktqualität einer Anlage zur Herstellung von Hohlglasartikeln bekannt, welches von Messungen der emittierten Wärmestrahlung mittels einer IR-Kamera sowie der Wanddicke am heißen Ende einer Hohlglasproduktionsanlage abhängig ist. Die Erfassung einer umfänglichen Verteilung der Wanddicke am heißen Ende ist jedoch - wie bereits erwähnt - problematisch mit Hinblick auf die an dieser Stelle noch geringe mechanische Stabilität der Hohlglasartikel. Zumindest wird hierdurch die Durchlaufgeschwindigkeit der Artikel begrenzt bzw. vermindert.

US5437702 beschreibt die Überwachung einer Hohlglasproduktionsanlage mittels Kameras nach der heissen Zone und nach der kalten Zone.

Es ist daher die Aufgabe der Erfindung, ein Verfahren der eingangs genannten Art dahingehend auszugestalten, dass zu einem frühestmöglichen Zeitpunkt Informationen über die Wandstärkeverteilung eines Hohlglasartikels vorliegen. Gelöst ist diese Aufgabe bei einem solchen Verfahren durch die Merkmale des Kennzeichnungsteils des Anspruchs 1.

Erfindungswesentlich ist, dass am heißen Ende der Hohlglasproduktionsanlage eine IR-Aufzeichnung der von dem Hohlglasartikel emittierten Verteilung der Gesamtstrahlung vorgenommen wird, welches beispielsweise durch mehrere IR-Kameras beiderseits eines Transportbandes, auf dem die Hohlglasartikel aufstehen, durchgeführt wird. Der Hohlglasartikel, dessen Gesamtstrahlung aufgezeichnet worden ist, durchläuft anschließend eine Einrichtung zur thermischen Behandlung, z. B. einen Kühlofen und gelangt an dessen Ausgang zum kalten Ende der Hohlglasproduktionsanlage. Hier wird in herkömmlicher Weise eine umfängliche Verteilung der Wandstärke des Hohlglasartikels gemessen und aufgezeichnet, wobei beide Aufzeichnungen, nämlich diejenige der IR-Strahlung und diejenige, welche die Wandstärkeverteilung darstellt, jeweils zeit- und / oder artikelbezogen erfolgen. Beide Aufzeichnungen sind somit um die Zeitspanne der Durchlaufzeit durch den Kühlofen zeitlich versetzt. Es wird trotz des zeitlichen Versatzes angenommen, dass die am kalten Ende aufgezeichneten Werte der Wandstärkenverteilung und die am heißen Ende aufgezeichneten Werte der IR-Strahlung, bzw. der Gesamtstrahlung in einer funktionalen Abhängigkeit voneinander stehen, so dass unter Berücksichtigung dieses Zeitversatzes eine Kalibrierung der am heißen Ende aufgezeichneten Werte nach Maßgabe der Wandstärke möglich ist. Die Erfindung basiert somit auf der Prüfung einer Korrelation zwischen den Verläufen der Werte der Gesamtstrahlung und denjenigen der Wandstärken, und zwar bezogen auf einen Hohlglasartikel, so dass in jedem Fall die am heißen Ende ermittelten Strahlungswerte den Werten der Wandstärke zugeordnet werden können. Auf diese Weise ist eine frühestmögliche

Vermessung der Wandstärkeverteilung im Rahmen des Herstellungsprozesses der Hohlglasartikel gegeben. Dies ermöglicht im Bedarfsfall eine Korrektur der Wandstärkeverteilung nach Maßgabe eines Sollwerts bereits am heißen Ende, welches einfach und schnell durchführbar ist.

Gemäß den Merkmalen des Anspruchs 2 erfolgt die Aufzeichnung der Werte der Strahlung am heißen Ende und des Wandstärkeverlaufs am kalten Ende jeweils zeitbezogen. Unter Zugrundelegung der zu erwartenden Laufzeit von dem Standort der IR-Kameras bis zum kalten Ende ermöglicht dies die Zuordnung der beiden genannten Werte jeweils bezogen auf einen definierten Hohlglasartikel und damit die Prüfung des Wandstärkeverlaufs bereits am heißen Ende. Zum Ausgleich von Unschärfen kann hierbei für eine Formennummer eine Mittelwertbildung der IR-Strahlungswerte und der Messwerte der Wandstärke über einen definierten Zeitraum erfolgen. Die auf diese Weise gemessenen Wandstärkewerte sollten zyklisch überprüft und im Bedarfsfall aktualisiert werden.

Gemäß den Merkmalen des Anspruchs 3 ist jeder Hohlglasartikel mit einer individuellen Kennzeichnung versehen, welche am heißen Ende erzeugt wird und welche am kalten Ende ausgelesen werden kann. Diese Kennzeichnung kann neben individuellen Daten des jeweiligen Hohlglasartikels auch Prozessdaten der Herstellung umfassen. Auch dieser Umstand kann zur Identifizierung eines bestimmten Hohlglasartikels am kalten Ende benutzt werden, wobei aufgrund einer zeitbezogenen Speicherung der Werte der Strahlung sowie der Werte des Wandstärkenverlaufs in Verbindung mit der Kennzeichnung eine eindeutige Zuordnung der Werte der Wandstärke zu den Werten der Strahlung möglich ist.

Gemäß den Merkmalen des Anspruchs 4 werden die Werte des Wandstärkeverlaufs am kalten Ende sowie der Gesamtstrahlung am heißen Ende jeweils durch Grafiken bzw. Funktionen dargestellt. Zur Prüfung ob in den aufgezeichneten Funktionen Übereinstimmungen vorliegen, kommen an diesen Grafiken unter Berücksichtigung eines Zeitversatzes ortsversetzt Korrelationsverfahren zur Anwendung, da sich der Verlauf der am kalten Ende aufgezeichneten Werte in dem Verlauf der am heißen Ende aufgezeichneten Werte für den Fall einer Übereinstimmung auffinden lassen muss. Liegt eine Übereinstimmung vor, können den Werten der Strahlung in der jeweils zugeordneten Grafik am heißen Ende Werte der Wandstärke zugeordnet werden, so dass bereits für das heiße Ende bezogen auf einen Hohlglasartikel eine Funktion generierbar ist, welche die Ermittlung von Werten betreffend die Wandstärke bzw. den Wandstärkenverlauf ermöglicht.

Die so am heißen Ende gemäß den Merkmalen des Anspruchs 5 ermittelte, den Wandstärkeverlauf beschreibende Information kann in unterschiedlicher Form dargestellt werden. Sie dient u. a. dazu, Kontrollfunktionen für den Betrieb der Hohlglasproduktionsanlage auszuüben. Von besonderem Vorteil ist in diesem Zusammenhang, dass diese Informationen zu einem frühestmöglichen Zeitpunkt zur Verfügung stehen, so dass diese in unterschiedlicher Weise nutzbar sind.

Entsprechend den Merkmalen des Anspruchs 6 ist jede IR-Kamera unter Berücksichtigung des für die Aufnahmen in Betracht zu ziehenden Wellenlängenbereichs auf die jeweils zugekehrten Vorderseiten des jeweiligen Hohlglasartikels fokussiert. Die am heißen Ende zu prüfenden Hohlglasartikel haben eine Temperatur von ca. 300 °C bis 800 °C, welches einem Wellenlängenbereich von 5 µm bis 2,5 µm entspricht. Infolge dieser Fokussierung wird der Einfluss der Strahlung der Rückwand des Artikels vermindert, womit ein Beitrag zur Verbesserung eines Prüfungsergebnisses gegeben ist.

Die Merkmale der Ansprüche 7 und 8 sind auf unterschiedliche, lediglich beispielhaft zu verstehende Möglichkeiten der Nutzung der bereits am heißen Ende gewonnenen Informationen gerichtet. Diese können hiernach beispielhaft zu korrigierenden Eingriffen in die Einstellung von Maschinenparametern oder auch zum Auswurf von Hohlglasartikeln genutzt werden, welche bezogen auf Sollparameter nicht mehr tolerierbare Abweichungen aufweisen.

Die Erfindung wird im Folgenden unter Bezugnahme auf die beiliegenden Zeichnungen näher erläutert werden. Es zeigen:
Fig. 1 eine Draufsicht auf eine am heißen Ende einzusetzende Sensoranordnung;
Fig. 2 eine Draufsicht auf eine am kalten Ende einzusetzende Sensoranordnung;
Fig. 3 eine Seitenansicht eines Hohlglasartikels mit den am heißen Ende zu prüfenden Bereichen;
Fig. 4 eine Seitenansicht eines Hohlglasartikels mit den am kalten Ende zu prüfenden Bereichen;
Fig. 5 eine Darstellung der Intensitätsverteilung am heißen Ende;
Fig. 6 eine Darstellung der Wanddickenverteilung am kalten Ende;
Fig. 7 eine schematische Darstellung der Prüfung auf der Grundlage einer Korrelation zwischen den Messergebnissen am heißen und am kalten Ende.

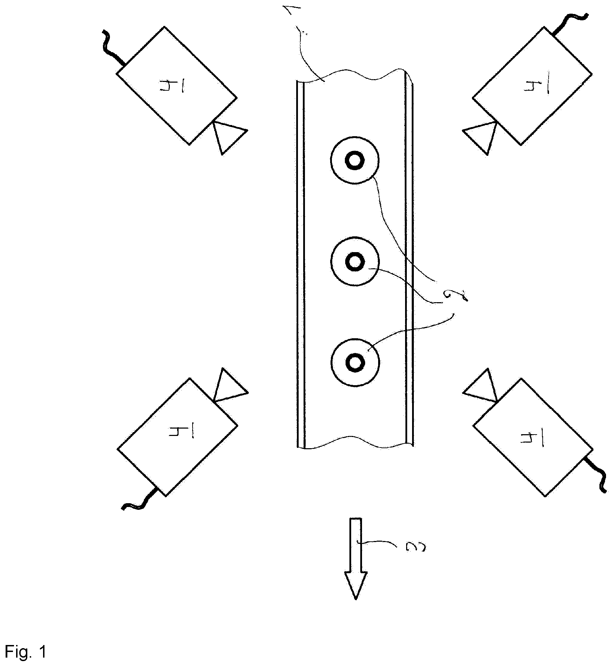

Mit 1 ist in Fig. 1 ein am heißen Ende einer im Übrigen nicht dargestellten Hohlglasproduktionsanlage eingesetztes Transportband bezeichnet, auf dem die aus dem Glasformprozess hervorgegangenen Hohlglasartikel 2 vertikal aufstehend in Richtung des Pfeils 3 zu einem ebenfalls nicht dargestellten Kühlofen überführt werden.

Seitlich neben dem Transportband 1 sind vier IR-Kameras 4 positioniert, deren Erfassungsbereiche symmetrisch zu einer vertikalen Längsmittelebene des Transportbandes 1 eingestellt sind.

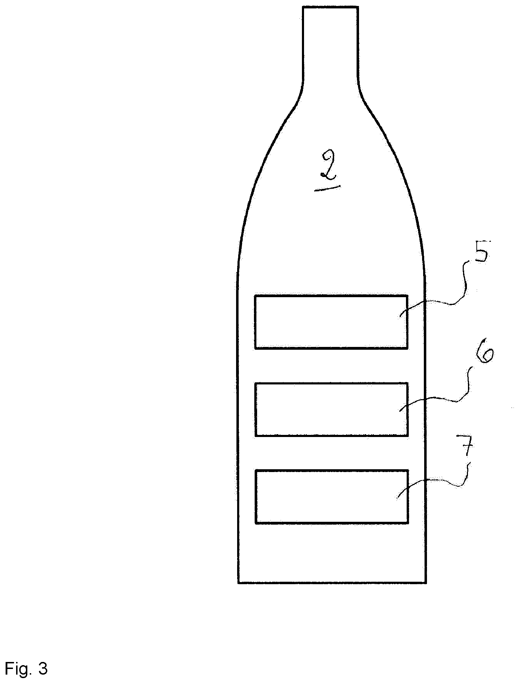

Fig. 3 zeigt in der Draufsicht drei rechteckförmige Erfassungsbereiche 5, 6, 7 auf dem Umfangsbereich des Hohlglasartikels 2, von denen mittels der IR-Kameras vier IR-Aufnahmen erstellt werden, aus deren farblicher Wiedergabe Informationen über die Intensitätsverteilung emittierter IR-Strahlung gewonnen werden. Es wird somit die von dem Hohlglasartikel vorder- und rückseitig von diesen Erfassungsbereichen ausgehende Verteilung der Gesamtstrahlung ermittelt.

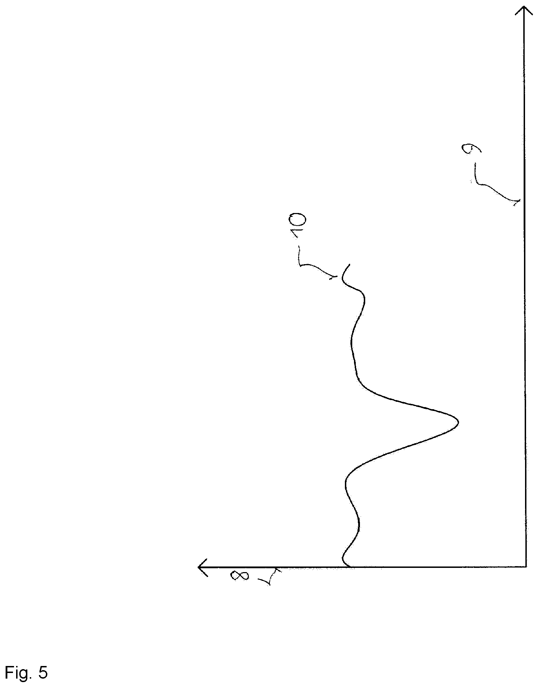

Fig. 5 zeigt beispielhaft eine Grafik, auf deren Ordinate 8 die Intensitätswerte und auf deren Abszisse 9 eine Umfangskoordinate des Hohlglasartikels 2 dargestellt sind. Anhand der IR-Aufnahmen wird eine Funktion 10 dargestellt, welche die Intensitätsverteilung der von dem Hohlglasartikel 2 emittierten Wärmestrahlung in Abhängigkeit von der genannten Umfangskoordinate abbildet und von der Informationen über die Verteilung der Wandungsdicken des Hohlglasartikels 2 am heißen Ende ableitbar sind.

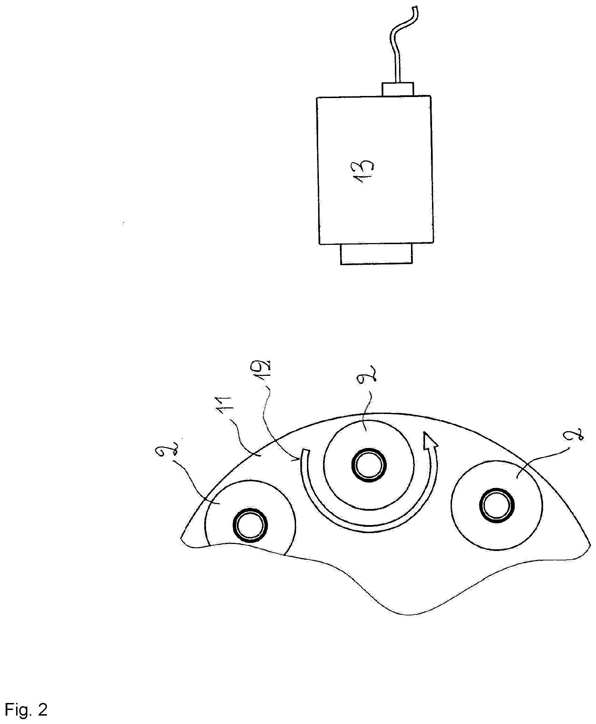

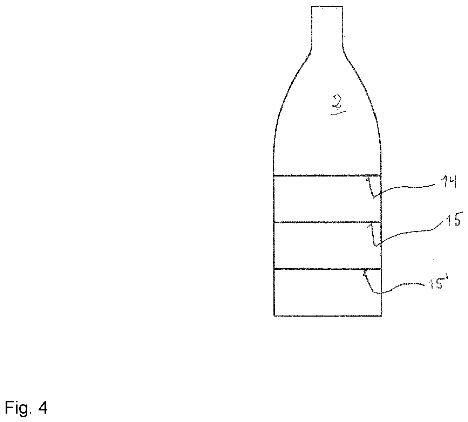

Fig. 2 zeigt in der Draufsicht einen am kalten Ende der Hohlglasproduktionsanlage positionierten Drehteller 11, entlang dessen Umfang Hohlglasartikel 2, die einen Kühlofen durchlaufen haben, aufgestellt sind. Der Drehteller 11 ist in an sich bekannter Weise um eine vertikale Achse drehbar gelagert. Die Hohlglasartikel 2 sind an ihren Aufstellungspunkten um ihre jeweiligen vertikalen Achsen in Richtung des Pfeils 12 drehbar gelagert und gelangen nacheinander in den Erfassungsbereich zumindest eines Sensors 13, der zur Messung der Wandstärkenverteilung eingerichtet ist. Hierbei kommen unterschiedliche Messverfahren zur Anwendung, wobei lediglich beispielhaft und ohne Anspruch auf Vollständigkeit die Verfahren der Lasertriangulation, konfokale Verfahren, kapazitive Verfahren etc. zu erwähnen sind. Der Sensor 13 dient einer Rundumvermessung der Wanddicke und es wird hierzu ergänzend auf die Darstellung gemäß Fig. 4 Bezug genommen, in der Messlinien 14, 15, 15' dargestellt sind, entlang derer die Wanddicke vermessen wird.. Während einer Umdrehung des Hohlglasartikels um seine Längsachse wird eine vollständige Abwicklung der Wanddickenverteilung entlang dessen Umfangs aufgezeichnet. Praktisch kommen entlang jeder Messlinie 14, 15, 15'ein Sensor zum Einsatz.

Die genannten drei Messlinien 14, 15, 15' sind derart positioniert, dass sie jeweils durch einen der Erfassungsbereiche 5, 6, 7 verlaufen.

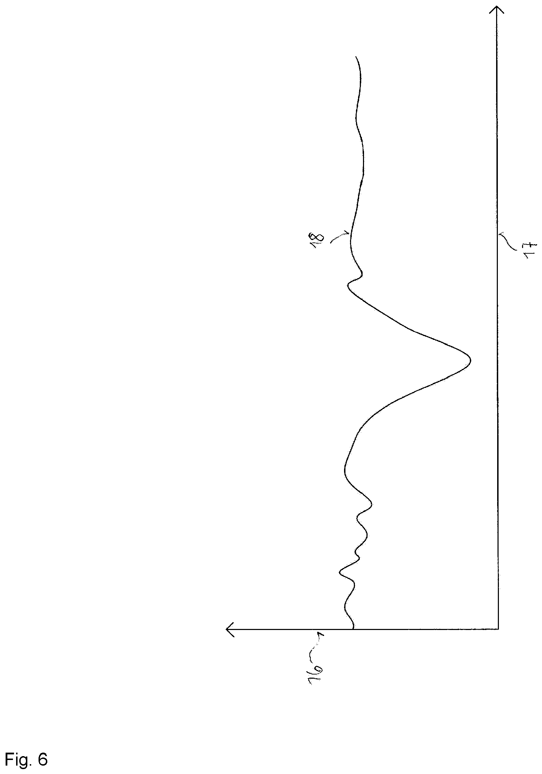

Fig. 6 zeigt beispielhaft eine Grafik, welche das Ergebnis einer vollständigen umfänglichen Abwicklung einer Wanddickenverteilung darstellt. Entlang der Ordinate 16 ist hierbei die ermittelte Wanddicke beispielsweise in [mm] aufgetragen, wobei entlang der Abszisse 17 eine Umfangskoordinate des zu prüfenden Hohlglasartikels aufgetragen ist. Hierbei ergibt sich eine Funktion 18, die den ermittelten Zusammenhang zwischen diesen beiden Größen beschreibt.

Für den Gegenstand der Erfindung wird nunmehr davon ausgegangen, dass die Strahlungsverteilung am heißen Ende zumindest angenähert einem Abbild der Wanddickenverteilung am kalten Ende entspricht. Einer direkten Kalibrierung steht jedoch der Umstand entgegen, dass zwischen den Funktionen der Strahlungsverteilung am heißen Ende und der Wanddickenverteilung am kalten Ende ein Zeitversatz besteht, der durch die Laufzeit vom heißen Ende, im engeren Sinne dem Standort der IR-Kameras, zum kalten Ende bedingt ist, wobei der Kühlofen durchlaufen wird.

Jedem Hohlglasartikel 2 ist eine Formennummer zugeordnet und es werden die am heißen Ende gemessenen Strahlungswerte in der Form der Funktionen 10 beispielsweise zeitbezogen gespeichert. Die Zeitpunkte der am kalten Ende aufgezeichneten Funktionen 18 desselben Hohlglasartikels sind gegenüber dem entsprechenden Zeitpunkt der ermittelten Funktion 10 am heißen Ende im wesentlichen um das Maß der Kühlofendurchlaufzeit versetzt. Erfindungsgemäß werden die am kalten Ende ermittelten, die umfängliche Verteilung der Wandstärke indizierenden Funktionen 18 um die Kühlofenlaufzeit zeitversetzt den am heißen Ende ermittelten, die Verteilung der von den Hohlglasartikeln 2 emittierten IR-Strahlung indizierenden Funktionen 10 zugeordnet. Das Wesen des Erfindungsgegenstands basiert somit darauf, dass - bezogen auf den einzelnen Hohlglasartikel 2 - das Bild der Funktion 10 in dem Bild der Funktion 18 enthalten ist, so dass beispielsweise mittels mathematischstatistischer Verfahren der Korrelation die Frage geprüft werden kann, ob dies tatsächlich der Fall ist, nämlich ob die Funktion 10 tatsächlich in der Funktion 18 enthalten ist. Die Anwendung anderer, dem Fachmann geläufiger Verfahren zur Prüfung von wenigstens teilweiser Übereinstimmung zweier Funktionen ist jedoch gleichermaßen möglich.

Bessere Ergebnisse können dadurch erreicht werden, dass der der Hohlglasartikel 2 eine individuelle Kennzeichnung aufweist, weil dann der Messung der Gesamtstrahlung die Messwerte der Wandstärke vom kalten Ende bei der Korrelation direkt zugeordnet werden können.

Das Ziel besteht in jedem Fall darin, den Werten der Funktion 10 Werte der Wandstärke zuzuordnen, um bereits am heißen Ende über exakte Informationen betreffend die Umfangsverteilung der Wandstärke zu gewinnen. Dies eröffnet für den Fall von Unregelmäßigkeiten bzw. Störungen in der Wandstärkeverteilung die Möglichkeit, zu einem frühestmöglichen Zeitpunkt Änderungen an den Herstellungsparametern der Glasformgebung vorzunehmen mit dem Ziel, diese Unregelmäßigkeiten zu beseitigen oder im Bedarfsfall einen Hohlglasartikel 2 als Ausschuss zu verwerfen, da nicht mehr tolerierbare Abweichungen der Wandstärke von Sollwerten vorliegen..

Zur Darstellung einer Durchführung der Korrelation zwischen den Funktionen 10, 18 wird im Folgenden Bezug genommen auf die Zeichnungsfigur 7. Ausgangspunkt ist die am kalten Ende aufgezeichnete Umfangsverteilung der gemessenen, durch die Funktion 18 wiedergegebenen Wandstärken gemäß der Grafik 19. Die, die Funktion 10 zeigenden Grafiken 20, 20' werden ortsversetzt entlang der eine vollständige Umfangsabwicklung zeigenden Grafik 19 verschoben und hinsichtlich einer eventuellen Übereinstimmung mit der Grafik 19 unter Anwendung von Korrelationsverfahren überprüft.

Die Grafiken 20, 20' zeigen hierbei keine Übereinstimmung - die Grafik 21 ist hingegen in der Grafik 19 enthalten. Dies bedeutet, dass die Grafik 21 dazu benutzt werden kann, anhand der Funktion 10 bereits am heißen Ende aufbauend auf einer Infrarotaufzeichnung über eine Messwertverteilung der Wandstärke des Hohlglasartikels zu verfügen und im Bedarfsfall in die Einstellung von Maschinenparametern der Hohlglasproduktionsanlage eingreifen zu können. Die so anhand der empfangenen IR-Strahlung gewonnenen Informationen über die Wandstärkeverteilung müssen in der Folge auf dem gleichen Wege wie vorstehend beschrieben zyklisch überprüft und im Bedarfsfall aktualisiert werden.

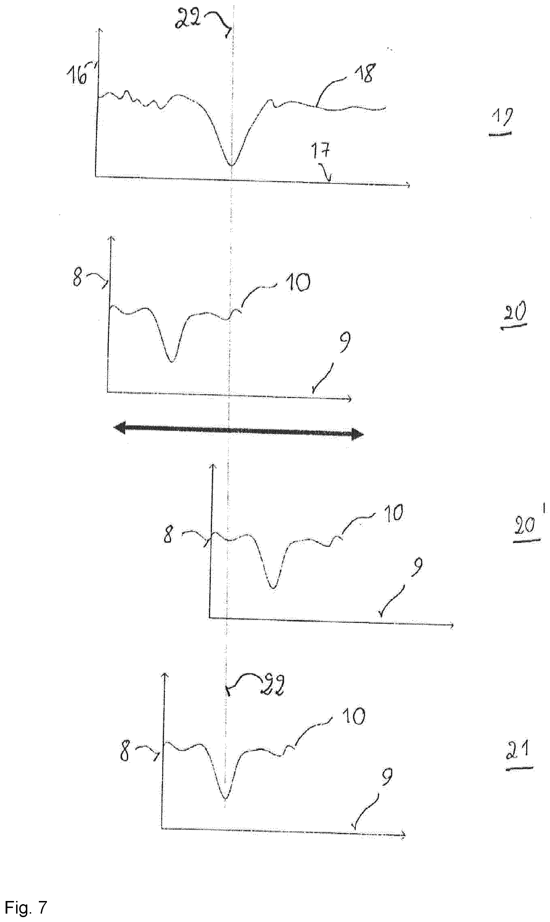

Mit 22 ist in Fig. 7 die Lage einer Umfangskoordinate bezeichnet, welche den Ausgangspunkt einer Prüfung der Grafiken 20, 20', und 21 im Sinne einer Korrelation mit der Grafik 19 bildet.

Man erkennt, dass mit dem erfindungsgemäßen Verfahren dem Betreiber einer Hohlglasproduktionsanlage eine Methode zur frühestmöglichen Erkennung von Anomalien jeglicher Art in der umfänglichen Wandstärkenverteilung zur Verfügung gestellt wird.

### Bezugszeichenliste:

- 1.: Transportband
- 2.: Hohlglasartikel
- 3.: Pfeil
- 4.: IR-Kamera
- 5.: Erfassungsbereich
- 6.: Erfassungsbereich
- 7.: Erfassungsbereich
- 8.: Ordinate
- 9.: Abszisse
- 10.: Funktion
- 11.: Drehteller
- 12.: Pfeil
- 13.: Sensor
- 14.: Messlinie
- 15.: Messlinie
- 15'.: Messlinie
- 16.: Ordinate
- 17.: Abszisse
- 18.: Funktion
- 19.: Grafik
- 20.: Grafik
- 20'.: Grafik
- 21.: Grafik
- 22.: Lage

## Patentansprüche

1. Verfahren zur Prüfung der umfänglichen Verteilung der Wandstärke eines Hohlglasartikels (2) in einer Hohlglasproduktionsanlage, bestehend zumindest aus einer Glasformmaschine und einer dieser in Durchlaufrichtung der Hohlglasartikel (2) nachgeordneten Einrichtung zur thermischen Behandlung derselben, mit Einrichtungen zum Transport der Hohlglasartikel (2) von dem Ausgang der Glasformmaschine, dem heißen Ende der Glasproduktionsanlage, bis zu dem Eingang der Einrichtung zur thermischen Behandlung und fortführend von deren Ausgang, dem Anfang des kalten Endes der Hohlglasproduktionsanlage, wobei am heißen Ende zumindest eine IR-Kamera (4) zur Aufzeichnung von Bereichen der von den Hohlglasartikeln (2) emittierten Verteilung der thermischen Gesamtstrahlung angeordnet ist, **dadurch gekennzeichnet, dass** an dem kalten Ende eine umfängliche drehwinkelabhängige Vermessung der Verteilung der Wandstärke eines Hohlglasartikels (2) ermittelt wird, dass an dem heißen Ende die umfängliche Verteilung der Gesamtstrahlung des Hohlglasartikels (2) erfasst und der umfänglichen Vermessung der Wandstärke zugeordnet wird mit dem Ziel der Feststellung einer funktionellen Abhängigkeit zwischen den Werten der Verteilungen der Gesamtstrahlung und der Wandstärke, so dass anhand der Gesamtstrahlung am heißen Ende der Wandstärkeverlauf wertemäßig erkennbar ist.

2. Verfahren nach Anspruch 1, **dadurch gekennzeichnet, dass** die Gesamtstrahlung am heißen Ende sowie der Wandstärkeverlauf am kalten Ende zeit- und artikelbezogen ermittelt und aufgezeichnet werden, und dass unter Berücksichtigung der für den Durchlauf des Hohlglasartikels (2) vom heißen zum kalten Ende benötigten Zeitspanne eine Zuordnung der Werte der Gesamtstrahlung und der Werte des Wandstärkenverlaufs vorgenommen wird.

3. Verfahren nach Anspruch 1 oder 2, **dadurch gekennzeichnet, dass** die Hohlglasartikel (2) mit einer individuellen Markierung versehen sind, dass diese Markierung am kalten Ende ausgelesen wird und dass anhand der Markierung eine zeit- und / oder artikelbezogene Zuordnung der Werte der Gesamtstrahlung sowie des Wandstärkenverlaufs vorgenommen wird.

4. Verfahren nach Anspruch 2 und 3, **dadurch gekennzeichnet, dass** die zeit- und drehwinkelbezogenen Aufzeichnungen des Wandstärkeverlaufs sowie der Gesamtstrahlung eines Hohlglasartikels (2) jeweils durch Funktionen (18, 10) dargestellt werden und dass diese Funktionen (18, 10) durch Korrelation auf Übereinstimmung geprüft werden, um für den Fall einer Übereinstimmung eine Zuordnung der am heißen Ende gewonnenen Werte der Gesamtstrahlung zu den Werten des Wandstärkeverlaufs vornehmen zu können.

5. Verfahren nach Anspruch 4, **dadurch gekennzeichnet, dass** die Zuordnung der Werte der Gesamtstrahlung zu den Werten der Wandstärke zur Kontrolle der im laufenden Betrieb der Glasproduktionsanlage sich ergebenden Werte des Wandstärkeverlaufs und im Bedarfsfall nach Maßgabe des Ergebnisses dieser Kontrolle zu Eingriffen in die Einstellungen von Maschinenparametern der Glasproduktionsanlage benutzt werden.

6. Verfahren nach einem der vorangegangenen Ansprüche 1 bis 4, **dadurch gekennzeichnet, dass** die IR-Kamera (4) unter Berücksichtigung des aufzuzeichnenden Wellenlängenbereichs auf eine der Kamera zugekehrte Vorderseite des Hohlglasartikels (2) fokussiert wird.

7. Verwendung der nach einem der vorangegangenen Ansprüche 1 bis 6 gewonnenen Information über den Wandstärkeverlauf zu eventuellen korrigierenden Eingriffen in die Einstellungen von Maschinenparametern der Glasproduktionsanlage.

8. Verwendung der nach einem der vorangegangenen Ansprüche 1 bis 6 gewonnenen Information über den Wandstärkenverlauf zum eventuellen Auswurf eines jeweils geprüften Hohlglasartikels (2).

## Claims

1. A method for checking the circumferential distribution of the wall thickness of a hollow glass article (2) in a hollow glass production facility, consisting at least of a glass forming machine and a device for thermal treatment of the same, which is arranged downstream thereof in the throughput direction of the hollow glass articles (2), having devices for transporting the hollow glass article (2) from the output of the glass forming machine, the hot end of the glass production facility, to the input of the device for thermal treatment and continuing from its output, to the beginning of the cold end of the hollow glass production facility, at least one IR camera (4) for recording regions of the distribution of the total thermal radiation emitted by the hollow glass articles (2) being arranged at the hot end, **characterized in that** a circumferential measurement of the distribution of the wall thickness of a hollow glass article (2) is determined as a function of the angle of rotation at the cold end, that the circumferential distribution of the total radiation of the hollow glass article (2) is recorded at the hot end and is associated with the circumferential measurement of the wall thickness with the aim of establishing a functional dependency between the values of the distributions of the total radiation and the wall thickness, so that the wall thickness profile can be recognized in terms of value based on the total radiation at the hot end.

2. The method according to claim 1, **characterized in that** the total radiation at the hot end and the wall thickness profile at the cold end are determined and recorded in relation to time and article, and the values of the total radiation and the values of the wall thickness profile are associated, taking into account the time span required for the hollow glass article (2) to pass from the hot to the cold end.

3. The method according to claim 1 or 2, **characterized in that** the hollow glass articles (2) are provided with an individual marking, that this marking is read out at the cold end and that, based on the marking, a time and/or article-related association of the values of the total radiation and the wall thickness profile is made.

4. The method according to claim 2 and 3, **characterized in that** the time and angle of rotation-related recordings of the wall thickness profile and the total radiation of a hollow glass article (2) are each represented by functions (18, 10) and that these functions (18, 10) are checked for agreement by correlation in order to be able to associate the values of the total radiation obtained at the hot end with the values of the wall thickness profile in the event of an agreement.

5. The method according to claim 4, **characterized in that** the association of the values of the total radiation with the values of the wall thickness to control the values of the wall thickness profile during operation of the glass production facility and, if necessary, in accordance with the result of this control, can be used to intervene in the settings of machine parameters of the glass production facility.

6. The method according to any one of the preceding claims 1 to 4, **characterized in that** the IR camera (4) is focused on a front side of the hollow glass article (2) turned toward the camera, taking into account the wavelength range to be recorded.

7. A use of the information obtained according to any one of the preceding claims 1 to 6 about the wall thickness profile for possible corrective interventions in the settings of machine parameters of the glass production facility.

8. A use of the information obtained according to any one of the preceding claims 1 to 6 about the wall thickness profile for possible ejection of a respectively checked hollow glass article (2).

## Revendications

1. Procédé de contrôle de la répartition extensive de l'épaisseur de paroi d'un article en verre creux (2) dans une installation de production de verre creux, constituée d'au moins une machine de moulage du verre et d'un dispositif pour le traitement thermique des articles en verre creux (2) disposé derrière celle-ci dans la direction de passage, avec des dispositifs pour le transport des articles en verre creux (2) à partir de la sortie de la machine de moulage du verre, de l'extrémité chaude de l'installation de production du verre jusqu'à l'entrée du dispositif de traitement thermique et par la suite, sa sortie, du début de l'extrémité froide de l'installation de production de verre creux, où au moins une caméra IR (4) est disposée à l'extrémité chaude pour l'enregistrement de zones de répartition du rayonnement thermique complet émis par les articles en verre creux (2), **caractérisé en ce qu'**une mesure extensive en fonction de l'angle de rotation de la répartition des épaisseurs de parois d'un article en verre creux (2) est déterminée, que la répartition extensive du rayonnement complet de l'article en verre creux (2) est détectée et est mise en correspondance avec la mesure extensive de l'épaisseur de paroi dans le but de constater une corrélation fonctionnelle entre les valeurs des répartitions du rayonnement complet et l'épaisseur de paroi, de sorte qu'à l'aide du rayonnement complet, l'évolution de l'épaisseur de la paroi peut être connue en terme de valeur à l'extrémité chaude.

2. Procédé selon la revendication 1, **caractérisé en ce que** le rayonnement complet à l'extrémité chaude ainsi que l'évolution de l'épaisseur de la paroi à l'extrémité froide sont déterminés et enregistrés en fonction du temps et de l'article, et qu'en tenant compte de l'intervalle de temps nécessaire pour le parcours de l'article en verre creux (2) de l'extrémité chaude à l'extrémité froide, une mise en correspondance des valeurs du rayonnement complet et des valeurs de l'évolution de l'épaisseur de parois est effectuée.

3. Procédé selon la revendication 1 ou la revendication 2, **caractérisé en ce que** les articles en verre creux (2) sont pourvus d'un marquage individuel, que ce marquage est lu à l'extrémité froide et qu'à l'aide du marquage, une mise en correspondance des valeurs du rayonnement complet et de l'évolution de l'épaisseur de la paroi en fonction du temps et/ou de l'article est effectuée.

4. Procédé selon la revendication 2 et la revendication 3, **caractérisé en ce que** les enregistrements par rapport à l'angle de rotation et au temps de l'évolution de l'épaisseur de la paroi ainsi que le rayonnement complet d'un article en verre creux (2) sont respectivement représentés par des fonctions (18, 10) et que ces fonctions (18, 10) sont vérifiées au niveau de leur concordance par une mise en correspondance afin de pouvoir effectuer une corrélation des valeurs du rayonnement complet obtenues à l'extrémité chaude avec les valeurs de l'évolution de l'épaisseur de paroi dans le cas d'une concordance.

5. Procédé selon la revendication 4, **caractérisé en ce que** la corrélation des valeurs du rayonnement complet avec les valeurs de l'épaisseur de paroi est employée pour le contrôle des valeurs de l'évolution de l'épaisseur de la paroi se produisant lors du fonctionnement continu de l'installation de production de verre et, en cas de besoin, en fonction du résultat de ce contrôle, pour intervenir dans les réglages des paramètres des machines de l'installation de production de verre.

6. Procédé selon l'une des revendications précédentes 1 à 4, **caractérisé en ce que** la caméra IR (4) est focalisée sur une face avant de l'article en verre creux (2) orientée vers la caméra en tenant compte du domaine de longueurs d'ondes représenté.

7. Utilisation de l'information concernant l'évolution de l'épaisseur de paroi obtenue selon l'une des revendications précédentes 1 à 6 pour une intervention correctrice éventuelle dans les réglages des paramètres de machine de l'installation de production de verre.

8. Utilisation de l'information concernant l'évolution de l'épaisseur de paroi obtenue selon l'une des revendications précédentes 1 à 6 pour le rejet éventuel d'un article en verre creux (2) respectivement contrôlé.
